# EUROPEAN PATENT SPECIFICATION

(11) **EP 4 246 063 B1**
(45) Date of publication and mention of the grant of the patent: **29.10.2025**
(21) Application number: 22162320.0
(22) Date of filing: 15.03.2022
(51) Int. Cl.: F25D 11/00, F25B 27/00, B60H 1/32

(54) **TRANSPORTATION REFRIGERATION UNIT**
TRANSPORT-KÜHLEINHEIT
UNITÉ DE RÉFRIGÉRATION DE TRANSPORT

(43) Date of publication of application: 20.09.2023
(73) Proprietor: Carrier Corporation, Palm Beach Gardens, FL 33418 (US)
(72) Inventor: RENAULT, Loïc, 76520 Franqueville Saint Pierre (FR)
(74) Representative: Dehns

(56) References cited:
- EP-A1- 3 900 971
- WO-A1-2015/106238
- WO-A1-2016/130537
- WO-A1-2017/192570
- JP-B2- 4 396 938

## Description

The present invention relates to a method of operating a transportation refrigeration unit (TRU) and to an apparatus comprising a TRU. The invention further extends to a transportation refrigeration system comprising a TRU. The invention further extends to a cold chain distribution system.

Typically, cold chain distribution systems are used to transport and distribute cargo, or more specifically perishable goods and environmentally sensitive goods (herein referred to as perishable goods) that may be susceptible to temperature, humidity, and other environmental factors. Perishable goods may include but are not limited to fruits, vegetables, grains, beans, nuts, eggs, dairy, seed, flowers, meat, poultry, fish, ice, and pharmaceuticals. Advantageously, cold chain distribution systems allow perishable goods to be effectively transported and distributed without damage or other undesirable effects.

Refrigerated vehicles and trailers are commonly used to transport perishable goods in a cold chain distribution system.

Conventionally, transportation refrigeration systems (such as refrigerated vehicles and refrigerated trailers) include a transportation refrigeration unit. Such transportation refrigeration units may comprise a refrigerant compressor, a condenser with one or more associated condenser fans, an expansion device, and an evaporator with one or more associated evaporator fans, which are connected via appropriate refrigerant lines in a closed refrigerant flow circuit.

The transportation refrigeration unit is typically mounted to the vehicle or to the trailer in operative association with a cargo space defined within the vehicle or trailer for maintaining a controlled temperature environment within the cargo space. Air or an air/ gas mixture is drawn from the interior volume of the cargo space by means of the evaporator fan(s) associated with the evaporator, passed through the airside of the evaporator in heat exchange relationship with refrigerant whereby the refrigerant absorbs heat from the air, thereby cooling the air. The cooled air is then supplied back to the cargo space.

For commercially available transportation refrigeration systems, such as refrigerated vehicles and refrigerated trailers, the compressor, and optionally other components of the transportation refrigeration unit, may be powered, either directly or indirectly, by the primary motive engine of the transportation refrigeration system (i.e. the combustion engine used to power transit). Alternatively, a dedicated engine may be provided on the transportation refrigeration system for powering the transportation refrigeration unit and may in fact form part of the transportation refrigeration unit itself (i.e. be a component thereof). Such a dedicated engine may, for example, be diesel powered. It is also known to use a dedicated gas engine (i.e. a gaseous fuelled engine or also termed a natural gas engine) for powering the TRU. Compressed natural gas (CNG) has been used as a fuel source for such gas engines in order to power the TRU, e.g. as is the case for the Applicant's own earlier TRU: Compressed Natural Gas-Powered Supra^{™} Unit.

CNG is natural gas that has been compressed at ambient temperature conditions to less than 1% of the volume which the same amount of gas occupies at standard atmospheric pressure. This requires the natural gas to be pressurised and stored under pressure of 20-25 MPa. CNG primarily comprises methane, but some other hydrocarbons (e.g. ethane) may also be comprised therein.
WO 2016/130537 A1 discloses a refrigeration system including a regeneration heat exchanger containing a volume of heat transfer fluid and a cargo heat exchanger. The cargo heat exchanger is fluidly connected to the regeneration heat exchanger to circulate the volume of heat transfer fluid therethrough. EP 3900971 A1 discloses a fuel storage and delivery system for a refrigerated cargo vehicle comprising a first fuel tank and a second fuel tank; and a refrigeration unit fuel supply line fluidly connected to the second fuel tank for supplying fuel from the second fuel tank to a transport refrigeration unit engine. WO 2015/106238 A1 discloses a refrigeration unit having refrigerant flowing there through; and a regeneration heat exchanger gasifying the fuel prior to the fuel entering an engine via a thermal energy exchange with the refrigerant flowing through the regeneration heat exchanger. WO 2017/192570 A1 discloses a refrigeration unit having refrigerant flowing there through and a regeneration heat exchanger for gasifying fuel prior to the fuel entering an engine via a thermal energy exchange with the refrigerant flowing through the regeneration heat exchanger. JP4396938B2 discloses a transportation refrigeration unit and a method of operating such transportation refrigeration unit according to the preamble of claims 6, respectively 1.

In accordance with a first aspect of the invention, there is provided a method according to claim 1.

There is provided a method of operating a transportation refrigeration unit (TRU) powered by a gas engine (i.e. a gaseous fuelled engine or also termed a natural gas engine), the method comprising: vaporising liquefied natural gas; and combusting the vaporised liquefied natural gas in the gas engine to power the transportation refrigeration unit.

Liquefied natural gas (LNG) is natural gas (predominantly methane, CH₄, with some ethane, C₂H₆) that has been condensed by cooling it down, typically to between -130°C to -162 °C. LNG takes up approximately 1/600^{th} (approximately 0.2%) the volume of the same amount of natural gas in the gaseous state at standard temperature and pressure conditions. Thus, LNG is comparatively very dense and hence provides a particularly space efficient means for storing and transporting natural gas. LNG is conventionally formed and stored at or at close to ambient pressure conditions.

The invention of the first aspect is advantageous since it makes use of LNG as a fuel source to power the TRU. Use of LNG as a fuel source requires that the liquefied natural gas is vaporised into a gaseous form prior to its introduction into the gas engine. Combustion of natural gas as a fuel source for the TRU Is associated with improved efficiency and lower environmentally harmful emissions as compared to prior art arrangements which rely on diesel or petrol combustion for a similar purpose.

The ability to use LNG as a fuel source for the gas engine to power the TRU also has advantages over the use of CNG as known in the prior art. For example, and as can be deduced from the above discussion, LNG is denser than CNG and therefore a given amount of natural gas will occupy a smaller volume as LNG as compared to CNG. As such, a TRU operated in accordance with the method of the first aspect requires a comparably smaller fuel storage volume than a TRU which is powered by solely CNG, which provides clear advantages in the context of transportation.

The improved efficiency of storage for LNG as compared to CNG is only further exaggerated by the nature of the vessels used to store these respective fluids. Given CNG requires pressurised storage, thick walled vessels that are typically made of steel are required for storing and transporting CNG. The requisite wall thickness places limits on the size of the tank that can be used, meaning that the volume of CNG stored therein is also limited. The thick container also occupies a large amount of space itself, which takes away from the available space for CNG storage. In contrast, LNG does not require such robust vessels since it is at or at close to ambient pressure conditions. Thus, comparatively larger volume containers for storage are possible and containers formed of a smaller amount of material can be used for LNG storage, which in turn improves efficiency of storage. Given the reduced material of the LNG vessels they are also less costly than their CNG counterparts and are also more efficiently transported as part of a transportation refrigeration system.

LNG provides further advantages over CNG use as it is, typically, more prevalently available since an already well established LNG infrastructure exists. This is because LNG is commonly used as a fuel source for the primary motive engine for various vehicles across the roads. As such, refuelling is made easier when operating a TRU in accordance with the first aspect of the invention since this already existent infrastructure can be relied upon.

The gas engine may be a gaseous fuelled engine and/or a natural gas engine.

The gas engine may be a separate, distinct component to the TRU. For example, the gas engine may be a gas engine dedicated to powering the TRU which is separate from the TRU but associated therewith/connected thereto. Alternatively, the gas engine may be a primary, motive engine of a transportation refrigeration system (further discussion on which is set out below) which the TRU is associated with. As such, the step of combusting the vaporised liquefied natural gas in the gas engine may additionally provide power for the transportation refrigeration system, for motion/movement or otherwise.

The gas engine may be comprised as part (i.e. a component) of the TRU. To say this another way, the TRU may comprise the gas engine. For example, the gas engine may be an integral component of the TRU and may be dedicated for the provision of power to solely the TRU.

The use of a dedicated gas engine (e.g. a gas engine comprised as part of the TRU or otherwise dedicated solely to the TRU) is advantageous since it means that refrigeration provided for by the TRU is not reliant on, for example, a primary, motive engine of a transportation refrigeration system to operate. Rather, the dedicated gas engine provides power to the TRU independently of other systems and hence the TRU can be operated more efficiently and on demand. Further, the TRU can be operated without requiring the inefficiency of operating other systems (e.g. requiring that the primary motive engine of the transportation refrigeration system is operated) by virtue of a dedicated gas engine.

The transportation refrigeration unit may be mounted/attached to a transportation refrigeration system (e.g. a vehicle or a refrigerated trailer) and may be in operative association with a cargo space defined within the transportation refrigeration system. The transportation refrigeration unit may be configured to cool/refrigerate and/or maintain a controlled temperature environment within the cargo space. Specifically, the transportation refrigeration unit may comprise a refrigerant circuit that is configured to refrigerate a cargo space/refrigeration volume of a transportation refrigeration system. As such, subsequent to the step of combusting the vaporised liquefied natural gas in the gas engine to power the transportation refrigeration unit, the method may comprise cooling and/or refrigerating a cargo space of a transportation refrigeration system with the TRU, optionally with the refrigeration circuit. The cargo space may be a temperature controlled volume for storage and transport of perishable goods.

The refrigeration circuit may comprise one or more of: a refrigerant compressor, a condenser and optionally one or more associated condenser fans, an expansion device, and an evaporator and optionally one or more associated evaporator fans. These components may be associated via appropriate refrigerant lines in a closed refrigerant circuit. The transportation refrigeration unit may further comprise one or more heat exchangers. The step of combusting the vaporised liquefied natural gas in the gas engine to power the transportation refrigeration unit may comprise providing power to any and all components of the TRU and/or refrigeration circuit as required.

The optional step of cooling and/or refrigerating a cargo space of a transportation refrigeration system with the refrigeration circuit of the TRU may comprise: drawing air or an air gas mixture from the interior volume of the cargo space by means of the evaporator fan(s) associated with the evaporator; passing the air or the air gas mixture through the airside of the evaporator in heat exchange relationship with refrigerant whereby the refrigerant absorbs heat from the air or the air gas mixture to thereby cool the air or the air gas mixture; and supplying the cooled air back to the cargo space.

Vaporising the LNG may comprise vaporising the LNG in a vaporiser. Vaporising the LNG comprises heating the LNG. The method comprises the step of vaporising the LNG by heating the LNG. Heating the LNG may comprise heating the LNG to ambient temperature conditions, e.g. to between 0°C - 40°C, optionally to between 5°C -35°C, further optionally to between 10°C - 30°C, even further optionally to between 15°C - 25°C, as a specific example to 20°C.

Heating the LNG comprises heating the LNG using a heat exchanger. In such a scenario, the heat exchanger may be considered a vaporiser. The heat exchanger may form part of a (the) refrigeration circuit. The heat exchanger may be positioned inside or outside of a (the) cargo space of a (the) transportation refrigeration system.

The heat exchanger used to heat LNG is positioned upstream of the evaporator and the expansion device of the refrigeration circuit and downstream of the condenser of the refrigeration circuit. As such, heating the LNG using a heat exchanger comprises exchanging thermal energy from refrigerant in the refrigeration circuit to the LNG. The heat exchanger may be a dedicated heat exchanger that has been introduced into the refrigeration circuit for the primary purpose of heating LNG. That is, the heat exchanger for heating the LNG may be separate to any other heat exchangers otherwise present in the refrigeration circuit. The heat exchanger is arranged to transfer thermal energy between refrigerant upstream of an expansion device of the refrigeration circuit and refrigerant downstream of an evaporator of the refrigeration circuit and simultaneously to transfer thermal energy between LNG and refrigerant in the refrigeration circuit in order to heat LNG. Such a heat exchanger may comprise a dedicated conduit for LNG along with separate dedicated conduits for both hot and cold refrigerant entering the heat exchanger.

Employing a heat exchanger in a refrigeration circuit, in particular one situated upstream of an evaporator and/or an expansion device of the refrigeration circuit, of the TRU to vaporise the LNG is advantageous since it can be used to improve performance of the refrigeration circuit. This is because when LNG is heated upstream of the evaporator thermal energy is drawn from the refrigerant prior to its entry into the evaporator, resulting in cooler refrigerant entering the evaporator and thereby improved performance of the refrigeration circuit. In effect, waste heat that has been absorbed into the refrigerant (e.g. waste heat absorbed from a cargo space/refrigeration volume) is removed from the refrigerant circuit by the LNG which it improves its efficiency, and simultaneously and synergistically the waste heat is used to vaporise LNG to permit its use as fuel for a gas engine to power the TRU. The use of LNG as a 'pseudo-refrigerant' for the refrigerant in the refrigerant circuit also has the effect that the refrigeration circuit can be made smaller whilst still having the requisite cooling effect given the increased performance of cooling that is achieved.

The method may comprise supplying LNG from a storage tank or tanks prior to the step of vaporising LNG. Prior to the step of supplying LNG, the method may comprise storing the LNG in the storage tank(s). The storage tank(s) may be provided on a (the) transportation refrigeration system. The storage tank(s) may be configured to store LNG therein and thus configured to maintain LNG at very low temperatures (e.g. -162 C), with the exact temperature conditions being determined based on ambient pressure conditions.

The method may comprise using and/or providing a transportation refrigeration unit as described herein.

The method may comprise providing a transportation refrigeration system, and attaching/mounting the transportation refrigeration unit to the transportation refrigeration system. The transportation refrigeration unit may be attached/mounted to the transportation refrigeration system such that it is in operative association with a cargo space therein and such that it is configured to refrigerate/cool the cargo space. The transportation refrigeration system may be a refrigerated vehicle, e.g. a refrigerated light goods vehicle or heavy goods vehicle. The transportation refrigeration system may be a refrigerated trailer, e.g. a refrigerated trailer of a heavy goods vehicle. The method may comprise, as a result of combusting the vaporised liquefied natural gas in the gas engine to power the transportation refrigeration unit, refrigerating (e.g. cooling) a cargo space (e.g. a refrigerated volume) defined within the transportation refrigeration system (e.g. within the vehicle or trailer) and/or maintaining a controlled temperature environment within the cargo space.

As alluded to above, the gas engine may be arranged to power the transportation refrigeration system in addition to powering the transportation refrigeration unit. As such, the method may comprise combusting the vaporised liquefied natural gas in the gas engine to power the transportation refrigeration unit and the transportation refrigeration system (e.g. to provide motive power to the transportation refrigeration system).

Alternatively, as also alluded to above, the method may comprise providing a dedicated engine for powering the transportation refrigeration system, e.g. a primary, motive engine for powering motion of the transportation refrigeration system. The gas engine dedicated to the TRU may therefore be a first engine and the engine dedicated to the transportation refrigeration system may be a second engine. The dedicated engine for the transportation refrigeration system may be a second gas engine, and the method may comprise combusting the vaporised liquefied natural gas in the (first) gas engine to power the transportation refrigeration unit in parallel to combusting vaporised liquefied natural gas in the second gas engine to power the transportation refrigeration system. As such, the method may comprise supplying a first portion of the vaporised liquefied natural gas to the first gas engine and supplying a second portion of the vaporised liquefied natural gas to the second gas engine.

In a scenario where a dedicated gas engine is provided for the TRU, the method may comprise combusting the vaporised liquefied natural gas in the gas engine to power the transportation refrigeration unit whilst an engine dedicated to the transportation refrigeration system is not operating. That is, the TRU may be operable while a vehicle engine is inoperable, and hence the TRU need not rely on operation of the vehicle to function.

The method may comprise combusting compressed natural gas in the gas engine to power the transportation refrigeration unit. This step may happen before after, alternately or in parallel/simultaneously to the step of combusting the vaporised liquefied natural gas in the gas engine to power the transportation refrigeration unit. Operating the TRU in this way provides improved flexibility of operation for the TRU since the TRU can be run on two separate fuel sources.

Related to the step of combusting compressed natural gas in the gas engine to power the transportation refrigeration unit, the method may comprise storing compressed natural gas and/or supplying compressed natural gas to the gas engine. The compressed natural gas may be stored in storage tanks that are configured to store compressed natural gas. That is, the storage tanks may be configured to maintain the compressed natural under pressure to retain the compressed natural gas as such. The storage tanks for the compressed natural gas may be provided/situated on a (the) transportation refrigeration system.

In accordance with a second aspect of the invention, there is provided an apparatus comprising: a transportation refrigeration unit (TRU); a gas engine configured to power the TRU; and a vaporiser in fluid communication with the gas engine, wherein the vaporiser is configured to vaporise liquefied natural gas (LNG) into a gaseous state and comprises a heat exchanger that is arranged to heat the liquefied natural gas to vaporise the liquefied natural gas into a gaseous state, and wherein the gas engine is configured to combust natural gas in a gaseous state that is received from the vaporiser to power the TRU. The heat exchanger is comprised as part of a refrigeration circuit of the transportation refrigeration unit and is arranged within a cargo space to exchange thermal energy from refrigerant in the refrigeration circuit to the liquefied natural gas to thereby heat and vaporise the liquefied natural gas, and the heat exchanger is arranged to transfer thermal energy between refrigerant upstream of an expansion device of the refrigeration circuit and refrigerant downstream of an evaporator of the refrigeration circuit and simultaneously to transfer thermal energy between the liquefied natural gas and refrigerant in the refrigeration circuit.

The TRU, the gas engine and/or the vaporiser of the second aspect may be in accordance with the TRU, the gas engine and/or the vaporiser as discussed above in connection with the first aspect, optionally including any optional feature thereof. The TRU, the gas engine and/or the vaporiser may be configured to carry out the functionality of the TRU, the gas engine and/or the vaporiser as described above in connection with the first aspect, including any optional functionality thereof.

In accordance with a third aspect of the invention, there is provided a transportation refrigeration system comprising an apparatus in accordance with the second aspect, optionally including any optional feature thereof, and/or which is arranged to be operated in accordance with the first aspect, optionally including any optional features thereof. The transportation refrigeration system may be in accordance with the transportation system discussed in connection with the above aspects.

The transportation refrigeration system as discussed in relation to any of the above aspects may be a refrigerated vehicle, e.g. a refrigerated light goods vehicle or heavy goods vehicle. The transportation refrigeration system may be a refrigerated trailer, e.g. a refrigerated trailer of a heavy goods vehicle.

In a fourth aspect, there is provided a cold chain distribution system comprising one or more transportation refrigeration systems in accordance with the third aspect of the invention, optionally inclusive of any optional features thereof.

Certain embodiments of the invention will now be described, by way of example only, and with reference to the following drawings, in which:
Figure 1 depicts a transportation refrigeration system comprising a transportation refrigeration unit according to an embodiment of the invention;
Figure 2 is a schematic of components of the transportation refrigeration system and transportation refrigeration unit described for explanatory purposes; and
Figure 3 is a schematic of components of a transportation refrigeration system comprising a transportation refrigeration unit according to an embodiment.

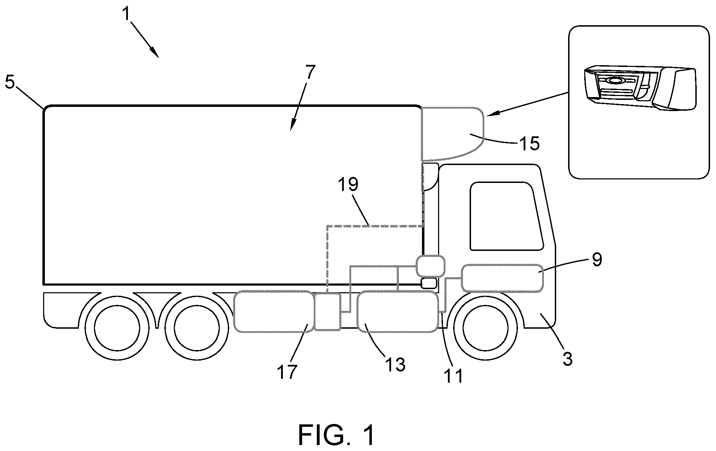

Figure 1 shows a transportation refrigeration system 1 in the form of a heavy good vehicle (HGV) 1. The HGV 1 comprises a tractive vehicle 3 and a trailer 5. The trailer 5 defines a cargo space 7 therein. The tractive vehicle 3 comprises a gas engine 9 that acts as the primary motive engine of the tractive vehicle 3/HGV 1. That is, the gas engine 9 provides motive power to a drive shaft (not shown) of the HGV 1 in order to drive its wheels into rotation.

The gas engine 9 is connected to and in fluid communication with a vehicle liquefied natural gas (LNG) tank 13 via a conduit 11. The LNG tank 13 is configured to store LNG therein and thus is configured to maintain LNG at very low temperatures (e.g. -162 °C), with the exact temperature conditions being determined based on ambient pressure conditions. The vehicle LNG tank 13 acts as a store for fuel (i.e. LNG) for the gas engine 9. Fueling the gas engine 9 such that motive power is provided to the HGV 1 comprises passing LNG from the vehicle LNG tank 13 to the gas engine 9 via conduit 11. During transit in the conduit 11, the LNG is vaporised (through heating or otherwise) into a gaseous form such that it can be suitably introduced into the gas engine 9 for combustion therein to provide motive power to the HGV 1.

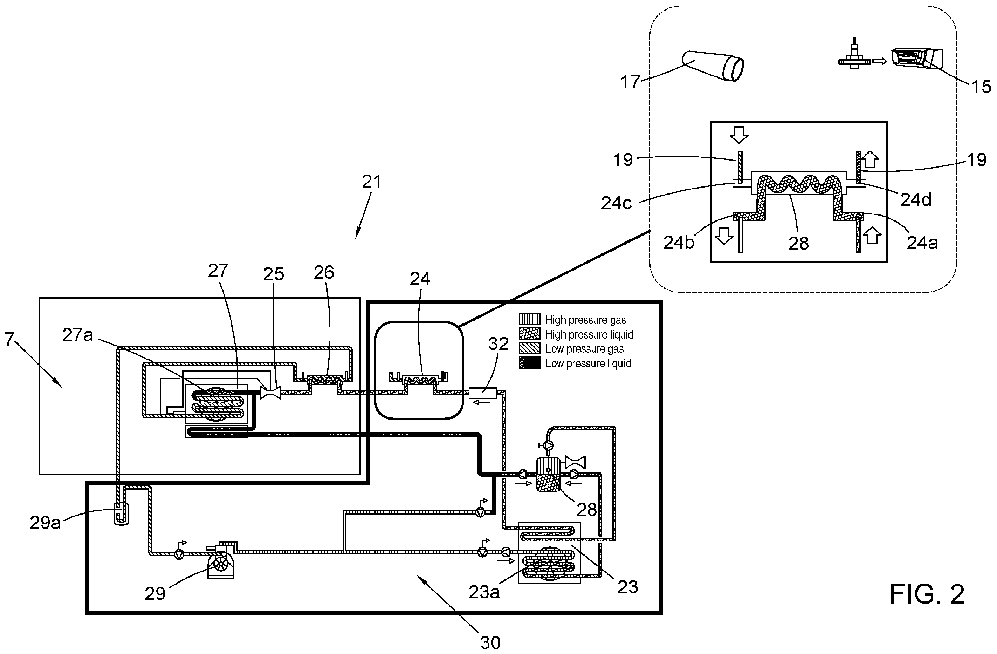

The HGV 1 further comprises a transportation refrigeration unit (TRU) 15 attached to the trailer 5. The TRU 15, as will be described in greater detail below with reference to Figure 2, is arranged to refrigerate the cargo space 7 defined within the trailer 5. Whilst not shown, the TRU 15 comprises a gas engine that is arranged to provide power for operation of the TRU 15 (and more specifically) to power components of the refrigeration circuit of the TRU 15 as will be described in greater detail below.

The TRU 15, specifically the gas engine of the TRU 15, is connected to and in fluid communication with a TRU LNG tank 17 via conduit 19. As with the vehicle LNG tank 13, the TRU LNG tank 17 is configured to maintain the LNG at very low temperatures, with the exact temperatures being determined based on ambient pressure conditions. The TRU LNG tank 17 acts as a store for fuel (i.e. LNG) for the TRU as will be described below with reference to Figure 2.

Figure 2 schematically depicts further details of the HGV 1 and the TRU 15 in an arrangement described for explanatory purposes. The TRU 15 comprises a refrigeration circuit 21 comprising a condenser 23 fluidly connected upstream of an expansion valve 25, which in turn is fluidly connected upstream of an evaporator 27. The evaporator 27 is fluidly connected upstream of an accumulator 29a that feeds a compressor 29, which in turn is fluidly connected upstream of the condenser 23 to complete the refrigeration circuit 21. A receiver 28 is also situated within the refrigeration circuit 21. The evaporator 27 and condenser 23 are each associated with an evaporator fan 27a and condenser fan 23a, respectively that are each configured to promote the flow of air over and thereby the heat transfer at the evaporator 27 and condenser 23.

Additionally, positioned within the refrigeration circuit 21, downstream of the condenser 23 and upstream of the expansion valve 25, are a first heat exchanger 24 and, downstream thereof, a second heat exchanger 26. A filter drier 32 is also positioned upstream of the first heat exchanger 24 and downstream of the condenser.

The second heat exchanger 26 is legacy heat exchanger 26 that is configured to place refrigerant upstream of the expansion valve 25 into thermal communication exchange with refrigerant downstream of the evaporator 27.

The first heat exchanger 24, further details of which are shown in the enlarged view at the top right of Figure 2, comprises an inlet 24a for refrigerant received from the filter drier 32 and condenser 23. The inlet 24a is fluidly connected to an outlet 24b for refrigerant to pass to the second heat exchanger 26. The first heat exchanger 24 further comprises an inlet 24c connected to the TRU LNG tank 17 via a first part of conduit 19. The inlet 24c is in fluid communication with an outlet 24d which in turn is fluidly connected to the TRU 15 via a second part of the conduit 19.

The second heat exchanger 26, the expansion valve 25 and the evaporator 27 are positioned within the cargo space of the 7 of the trailer 5 and are configured, in particular the evaporator 27 and evaporator fan 27a is configured, to refrigerate the cargo space 7.

The compressor 29, condenser 23 and first heat exchanger 24 are situated external to the cargo space in a condensing unit 30 of the TRU 15.

In use, the components of the refrigeration circuit 21, and in particular the compressor 29, the condenser fan 23a and the evaporator fan 27a are powered into operation by the gas engine of the TRU 15.

Operation of the compressor 29 pressurises gaseous refrigerant in the circuit 21 and sends said refrigerant downstream to the condenser 23 where the refrigerant is condensed into a liquid state through thermal exchange with air that is blown over the condenser 23 via the condenser fan 23a. The refrigerant is then circulated via the filter drier 32 to the first heat exchanger 24 to cool further and exchange thermal energy with LNG (more on this below) and to then to the second heat exchanger 26 where the refrigerant undergoes thermal exchange with refrigerant from downstream of the evaporator 27. The refrigerant is then passed to the expansion valve 25 for expansion, before being passed to the evaporator 27 where the refrigerant vaporizes through thermal exchange with the air in the cargo space 7 that is blown over the evaporator 27 by the evaporator fan 27a. This vaporisation of the refrigerant in the evaporator 27 results from the withdrawal of thermal energy from the air in the cargo space 7, which in turn results in a cooling/refrigeration of the cargo space 7.

The refrigerant is then output from the evaporator 27 where it is sent back through the second heat exchanger 26 for thermal exchange with refrigerant upstream of the expansion valve 25, before being output back via the accumulator 29a to the compressor 29 to be recirculated around the refrigeration circuit 21 again for further continued cooling of the cargo space 7.

The gas engine of the TRU 15 which powers operation of the refrigeration circuit 21 of the TRU 15 is fueled by supplying LNG from the TRU LNG tank 17 via the conduit 19 to the engine of the TRU 15. Before the LNG can be combusted in the gas engine of the TRU 15 however, it is vaporised into a gaseous form such that it is suited for combustion in the TRU 15 gas engine. This vaporisation is undertaken in the first heat exchanger 24. LNG from the TRU LNG tank 17 is fed by a first part of the conduit 19 into the inlet 24c of the heat exchanger 24 wherein the LNG is vaporised through thermal exchange with the refrigerant passing through the heat exchanger 24 from the condenser 23. Once vaporised, the vaporised LNG is output via the outlet 24d and is sent in its gaseous form for combustion in the combustion engine of the TRU 15.

By using the heat exchanger 24 to vaporise the LNG, not only is the LNG converted into a form that permits its combustion as a fuel for the gas engine of the TRU 15 but simultaneously the performance of the refrigeration circuit 21 is improved since additional waste heat from the refrigerant is removed to ensure cooled refrigerant is being passed to the evaporator 27 which ensures improved cooling of the cargo space 7.

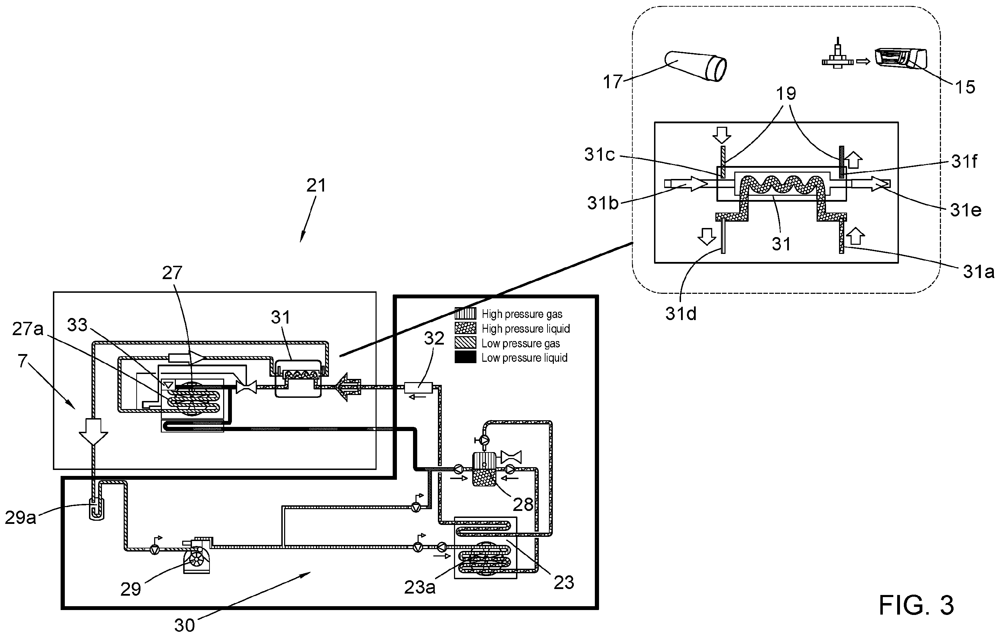

Figure 3 shows components of a transportation refrigeration system comprising a transportation refrigeration unit (TRU) according to the invention. The features and components of the transportation refrigeration unit and the transportation refrigeration system of Figure 3 are largely the same as the features and components of the HGV 1 and the transportation refrigeration unit 15 described above in relation to Figures 1 and 2. Correspondent features have thus been denoted with like reference numerals and a detailed description of these features will not be repeated again here.

Where the TRU 15 and the transportation refrigeration system of Figure 3 differ from the TRU 15 and HGV 1 of Figures 1 and 2 is that the first heat exchanger 24 and second heat exchanger 26 have been replaced in the refrigeration circuit 31 by a single combined type heat exchanger 31 that is positioned within the cargo space 7. The combined heat exchanger 31 provides the functionality of both the first and the second heat exchangers 24, 26 of the embodiment as described in relation to Figures 1 and 2. That is, the combined heat exchanger 31 both provides for thermal exchange between refrigerant upstream of the expansion valve 25 and refrigerant downstream of the evaporator 27, and additionally provides for thermal exchange between refrigerant upstream of the expansion valve 25 and LNG passing from the TRU LNG tank 17 and the gas engine of the TRU 15.

Further details of the combined heat exchanger 31 can be seen enlarged in the top right of Figure 3. As shown, the heat exchanger comprises three inlets 31a-31c and three outlets 31d-31f.

The inlet 31a is fluidly connected downstream of the condenser 23 and is arranged to receive refrigerant therefrom. The refrigerant received at inlet 31a is passed through the heat exchanger 31 and is output at outlet 31d where it is subsequently sent to an inlet of the expansion valve 25.

The inlet 31b is fluidly connected downstream of the evaporator 27 and is arranged to receive refrigerant therefrom. The refrigerant received at inlet 31b is passed through the heat exchanger 31 and is output at outlet 31e where it is subsequently sent to the compressor 29.

The inlet 31c is fluidly connected to the TRU LNG tank 17 via a first part of conduit 19 and is arranged to receive LNG therefrom. The LNG received at inlet 31c is passed through the heat exchanger 31 where it is vaporised through thermal exchange with refrigerant passing through the heat exchanger 31 and is output in gaseous form at outlet 31f. From the outlet 31f, the vaporised LNG is sent to the gas engine of the TRU 15 for combustion.

Thermal exchange between refrigerant upstream of the expansion valve 25 with LNG upstream of the gas engine of the TRU 15, which is provided for by the combined heat exchanger 31, is advantageous since it simultaneously vaporises the LNG into a gaseous form for combustion in the gas engine of the TRU 15 and removes waste heat from the refrigerant upstream of the expansion valve 25 and evaporator 27 such that improved and more efficient refrigeration can be provided to the cargo space 7.

In the embodiment of Figure 3, since the combined heat exchanger 31 is provided in the cargo space 7, a methane detector 33 is provided to detect any natural gas which may have leaked from the combined heat exchanger 31 into the enclosed environment of the cargo space 7. The methane detector 33 can thus provide an alert in the event for free methane such that explosion or asphyxiation risks can be avoided.

## Claims

1. A method of operating a transportation refrigeration unit (15) powered by a gas engine in operative association with a cargo space (7), the method comprising:
vaporising liquefied natural gas wherein the step of vaporising the liquified natural gas comprises heating the liquefied natural gas by exchanging thermal energy from refrigerant in a refrigeration circuit (21) of the transportation refrigeration unit (15) to the liquefied natural gas using a heat exchanger (31); and
combusting the vaporised liquefied natural gas in the gas engine to power the transportation refrigeration unit (15),
**characterised in that** the heat exchanger (31) is adapted to be arranged within said cargo space (7) to transfer thermal energy between refrigerant upstream of an expansion device (25) of the refrigeration circuit (21) and refrigerant downstream of an evaporator (27) of the refrigeration circuit (21) and simultaneously to transfer thermal energy between the liquefied natural gas and refrigerant in the refrigeration circuit (21).

2. A method as claimed in claim 1, wherein the transportation refrigeration unit (15) comprises the refrigeration circuit (21), and wherein the refrigerant circuit comprises one or more of: a refrigerant compressor (29), a condenser (23) and optionally one or more associated condenser fans (23a), the expansion device (25), the evaporator (27) and optionally one or more associated evaporator fans (27a); and wherein the step of combusting the vaporised liquefied natural gas in the gas engine to power the transportation refrigeration unit (15) comprises providing power to the one or more components of the refrigeration circuit (21).

3. A method as claimed in any preceding claim, wherein the transportation refrigeration unit (15) comprises the gas engine.

4. A method as claimed in any preceding claim, wherein the transportation refrigeration unit (15) is mounted to a transportation refrigeration system (1) and is in operative association with a cargo space (7) defined within the transportation refrigeration system (1), and wherein the method comprises, subsequent to the step of combusting the vaporised liquefied natural gas in the gas engine to power the transportation refrigeration unit (15), refrigerating a cargo space (7) of the transportation refrigeration system (1) with the transportation refrigeration unit (15).

5. A method as claimed in any preceding claim, comprising combusting compressed natural gas in the gas engine to power the transportation refrigeration unit.

6. An apparatus comprising:
a transportation refrigeration unit (15) in operative association with a cargo space (7);
a gas engine configured to power the transportation refrigeration unit; and
a vaporiser (31) in fluid communication with the gas engine;
wherein the vaporiser (31) is configured to vaporise liquefied natural gas into a gaseous state and comprises a heat exchanger (31) that is arranged to heat the liquefied natural gas to vaporise the liquefied natural gas into a gaseous state;
wherein the gas engine is configured to combust natural gas in a gaseous state that is received from the vaporiser to power the transportation refrigeration unit (15);
**characterised in that**:
the heat exchanger (31) is comprised as part of a refrigeration circuit (21) of the transportation refrigeration unit and is arranged within said cargo space (7) to exchange thermal energy from refrigerant in the refrigeration circuit (21) to the liquefied natural gas to thereby heat and vaporise the liquefied natural gas; and
the heat exchanger (31) is arranged to transfer thermal energy between refrigerant upstream of an expansion device (25) of the refrigeration circuit (21) and refrigerant downstream of an evaporator (27) of the refrigeration circuit (21) and simultaneously to transfer thermal energy between the liquefied natural gas and refrigerant in the refrigeration circuit (21).

7. An apparatus according to claim 6, wherein the transportation refrigeration unit (15) comprises the gas engine.

8. An apparatus as claimed in claim 6 or 7, wherein the gas engine is configured to combust compressed natural gas to power the transportation refrigeration unit (15).

9. An apparatus as claimed in claim 6, 7 or 8, comprising a liquefied natural gas storage tank (17) in communication with the vaporiser (24) and configured to supply liquefied natural gas thereto.

10. A transportation refrigeration system (1) comprising an apparatus in accordance with any of claims 6 to 9.

11. A transportation refrigeration system (1) according to claim 10, wherein the transportation refrigeration system is a refrigerated vehicle (1) or a refrigerated trailer (5) of a vehicle.

12. A transportation refrigeration system (1) according to claim 10 or 11, wherein the gas engine configured to power the transportation refrigeration unit (15) is a first engine and the transportation refrigeration system (1) comprises a second engine (9) that is a primary, motive engine for powering motion of the transportation refrigeration system (1).

13. A cold chain distribution system comprising one or more transportation refrigeration systems (1) in accordance with claim 10, 11 or 12.

## Patentansprüche

1. Verfahren zum Betreiben einer Transportkühleinheit (15), die von einem Gasmotor angetrieben wird, in operativer Verbindung mit einem Laderaum (7), das Verfahren umfassend:
Verdampfen von verflüssigtem Erdgas, wobei der Schritt des Verdampfens des verflüssigten Erdgases das Erhitzen des verflüssigten Erdgases durch Austausch von Wärmeenergie von Kältemittel in einem Kühlkreislauf (21) der Transportkühleinheit (15) zu dem verflüssigten Erdgas unter Verwendung eines Wärmetauschers (31) umfasst; und
Verbrennen des verdampften verflüssigten Erdgases in dem Gasmotor zum Antreiben der Transportkühleinheit (15),
**dadurch gekennzeichnet, dass** der Wärmetauscher (31) so angepasst ist, dass er innerhalb des Laderaums (7) angeordnet ist, um Wärmeenergie zwischen einem Kältemittel stromaufwärts einer Expansionsvorrichtung (25) des Kühlkreislaufs (21) und einem Kältemittel stromabwärts eines Verdampfers (27) des Kühlkreislaufs (21) zu übertragen und gleichzeitig Wärmeenergie zwischen dem verflüssigten Erdgas und dem Kältemittel in dem Kühlkreislauf (21) zu übertragen.

2. Verfahren nach Anspruch 1, wobei die Transportkühleinheit (15) den Kühlkreislauf (21) umfasst, und wobei der Kältemittelkreislauf eines oder mehrere umfasst von: einem Kältemittelverdichter (29), einem Kondensator (23) und optional einem oder mehreren zugehörigen Kondensatorlüftern (23a), der Expansionsvorrichtung (25), dem Verdampfer (27) und optional einem oder mehreren zugehörigen Verdampferlüftern (27a); und wobei der Schritt des Verbrennens des verdampften verflüssigten Erdgases in dem Gasmotor, um die Transportkühleinheit (15) anzutreiben, das Bereitstellen von Energie an die eine oder die mehreren Komponenten des Kühlkreislaufs (21) umfasst.

3. Verfahren nach einem der vorhergehenden Ansprüche, wobei die Transportkühleinheit (15) den Gasmotor umfasst.

4. Verfahren nach einem der vorhergehenden Ansprüche, wobei die Transportkühleinheit (15) an einem Transportkühlsystem (1) montiert ist und in operativer Verbindung mit einem Laderaum (7) steht, der innerhalb des Transportkühlsystems (1) definiert ist, und wobei das Verfahren nach dem Schritt des Verbrennens des verdampften verflüssigten Erdgases in dem Gasmotor zum Antreiben der Transportkühleinheit (15) das Kühlen eines Laderaums (7) des Transportkühlsystems (1) mit der Transportkühleinheit (15) umfasst.

5. Verfahren nach einem der vorhergehenden Ansprüche, umfassend Verbrennen von verdichtetem Erdgas in dem Gasmotor, um die Transportkühleinheit anzutreiben.

6. Vorrichtung, umfassend:
eine Transportkühleinheit (15) in operativer Verbindung mit einem Laderaum (7);
einen Gasmotor, der so konfiguriert ist, dass er die Transportkühleinheit antreibt; und
einen Verdampfer (31), der in Fluidverbindung mit dem Gasmotor steht;
wobei der Verdampfer (31) so konfiguriert ist, dass er verflüssigtes Erdgas in einen gasförmigen Zustand verdampft und einen Wärmetauscher (31) umfasst, der so angeordnet ist, dass er das verflüssigte Erdgas erhitzt, um das verflüssigte Erdgas in einen gasförmigen Zustand zu verdampfen;
wobei der Gasmotor so konfiguriert ist, dass er Erdgas in einem gasförmigen Zustand verbrennt, das von dem Verdampfer empfangen wird, um die Transportkühleinheit (15) anzutreiben;
**dadurch gekennzeichnet, dass**:
der Wärmetauscher (31) als Teil eines Kühlkreislaufs (21) der Transportkühleinheit umfasst ist und innerhalb des Laderaums (7) angeordnet ist, um Wärmeenergie von dem Kältemittel in dem Kühlkreislauf (21) zu dem verflüssigten Erdgas auszutauschen, um dadurch das verflüssigte Erdgas zu erhitzen und zu verdampfen; und
der Wärmetauscher (31) so angeordnet ist, dass er Wärmeenergie zwischen einem Kältemittel stromaufwärts einer Expansionsvorrichtung (25) des Kühlkreislaufs (21) und einem Kältemittel stromabwärts eines Verdampfers (27) des Kühlkreislaufs (21) überträgt und gleichzeitig Wärmeenergie zwischen dem verflüssigten Erdgas und dem Kältemittel in dem Kühlkreislauf (21) überträgt.

7. Vorrichtung nach Anspruch 6, wobei die Transportkühleinheit (15) den Gasmotor umfasst.

8. Vorrichtung nach Anspruch 6 oder 7, wobei der Gasmotor so konfiguriert ist, dass er verdichtetes Erdgas verbrennt, um die Transportkühleinheit (15) anzutreiben.

9. Vorrichtung nach Anspruch 6, 7 oder 8, umfassend einen Speichertank für verflüssigtes Erdgas (17), der mit dem Verdampfer (24) in Verbindung steht und so konfiguriert ist, dass er diesem verflüssigtes Erdgas zuführt.

10. Transportkühlsystem (1), umfassend eine Vorrichtung gemäß einem der Ansprüche 6 bis 9.

11. Transportkühlsystem (1) nach Anspruch 10, wobei das Transportkühlsystem ein Kühlfahrzeug (1) oder ein Kühlanhänger (5) eines Fahrzeugs ist.

12. Transportkühlsystem (1) nach Anspruch 10 oder 11, wobei der Gasmotor, der so konfiguriert ist, dass er die Transportkühleinheit (15) antreibt, ein erster Motor ist und das Transportkühlsystem (1) einen zweiten Motor (9) umfasst, der ein primärer Antriebsmotor zum Antreiben der Bewegung des Transportkühlsystems (1) ist.

13. Kühlkettenverteilungssystem, umfassend ein oder mehrere Transportkühlsysteme (1) gemäß Anspruch 10, 11 oder 12.

## Revendications

1. Procédé de fonctionnement d'une unité frigorifique de transport (15) alimentée par un moteur à gaz en association fonctionnelle avec un espace utilitaire (7), le procédé comprenant :
la vaporisation de gaz naturel liquéfié, dans lequel l'étape consistant à vaporiser le gaz naturel liquéfié comprend le chauffage du gaz naturel liquéfié par échange d'une énergie thermique à partir d'un fluide frigorigène dans un circuit frigorifique (21) de l'unité frigorifique de transport (15) vers le gaz naturel liquéfié à l'aide d'un échangeur de chaleur (31) ; et
la combustion du gaz naturel liquéfié vaporisé dans le moteur à gaz afin d'alimenter l'unité frigorifique de transport (15),
**caractérisé en ce que** l'échangeur de chaleur (31) est conçu pour être disposé à l'intérieur dudit espace utilitaire (7) afin de transférer une énergie thermique entre un fluide frigorigène en amont d'un dispositif de détente (25) du circuit frigorifique (21) et un fluide frigorigène en aval d'un évaporateur (27) du circuit frigorifique (21) et simultanément afin de transférer une énergie thermique entre le gaz naturel liquéfié et un fluide frigorigène dans le circuit frigorifique (21).

2. Procédé selon la revendication 1, dans lequel l'unité frigorifique de transport (15) comprend le circuit frigorifique (21), et dans lequel le circuit de fluide frigorigène comprend l'un ou plusieurs parmi : un compresseur frigorifique (29), un condenseur (23) et optionnellement un ou plusieurs ventilateurs de condenseur (23a) associés, le dispositif de détente (25), l'évaporateur (27) et optionnellement un ou plusieurs ventilateurs d'évaporateur (27a) associés ; et dans lequel l'étape consistant à brûler le gaz naturel liquéfié vaporisé dans le moteur à gaz afin d'alimenter l'unité frigorifique de transport (15) comprend l'alimentation en énergie du ou des composants du circuit frigorifique (21).

3. Procédé selon l'une quelconque revendication précédente, dans lequel l'unité frigorifique de transport (15) comprend le moteur à gaz.

4. Procédé selon l'une quelconque revendication précédente, dans lequel l'unité frigorifique de transport (15) est montée sur un système frigorifique de transport (1) et est en association fonctionnelle avec un espace utilitaire (7) défini à l'intérieur du système frigorifique de transport (1), et dans lequel le procédé comprend, suite à l'étape consistant à brûler le gaz naturel liquéfié vaporisé dans le moteur à gaz afin d'alimenter l'unité frigorifique de transport (15), la réfrigération d'un espace utilitaire (7) du système frigorifique de transport (1) avec l'unité frigorifique de transport (15).

5. Procédé selon l'une quelconque revendication précédente, comprenant la combustion de gaz naturel comprimé dans le moteur à gaz afin d'alimenter l'unité frigorifique de transport.

6. Appareil comprenant :
une unité frigorifique de transport (15) en association fonctionnelle avec un espace utilitaire (7) ;
un moteur à gaz configuré pour alimenter l'unité frigorifique de transport ; et
un vaporisateur (31) en communication fluidique avec le moteur à gaz ;
dans lequel le vaporisateur (31) est configuré pour vaporiser du gaz naturel liquéfié dans un état gazeux et comprend un échangeur de chaleur (31) qui est conçu pour chauffer le gaz naturel liquéfié afin de vaporiser le gaz naturel liquéfié dans un état gazeux ;
dans lequel le moteur à gaz est configuré pour brûler du gaz naturel dans un état gazeux qui est reçu du vaporisateur afin d'alimenter l'unité frigorifique de transport (15) ;
**caractérisé en ce que** :
l'échangeur de chaleur (31) fait partie d'un circuit frigorifique (21) de l'unité frigorifique de transport et est disposé à l'intérieur dudit espace utilitaire (7) pour échanger une énergie thermique à partir d'un fluide frigorigène dans le circuit frigorifique (21) vers le gaz naturel liquéfié afin de chauffer et de vaporiser ainsi le gaz naturel liquéfié ; et
l'échangeur de chaleur (31) est conçu pour transférer une énergie thermique entre un fluide frigorigène en amont d'un dispositif de détente (25) du circuit frigorifique (21) et un fluide frigorigène en aval d'un évaporateur (27) du circuit frigorifique (21) et simultanément pour transférer une énergie thermique entre le gaz naturel liquéfié et un fluide frigorigène dans le circuit frigorifique (21).

7. Appareil selon la revendication 6, dans lequel l'unité frigorifique de transport (15) comprend le moteur à gaz.

8. Appareil selon la revendication 6 ou 7, dans lequel le moteur à gaz est configuré pour brûler du gaz naturel comprimé afin d'alimenter l'unité frigorifique de transport (15).

9. Appareil selon la revendication 6, 7 ou 8, comprenant un réservoir de stockage de gaz naturel liquéfié (17) en communication avec le vaporisateur (24) et configuré pour fournir du gaz naturel liquéfié à celui-ci.

10. Système frigorifique de transport (1) comprenant un appareil selon l'une quelconque des revendications 6 à 9.

11. Système frigorifique de transport (1) selon la revendication 10, dans lequel le système frigorifique de transport est un véhicule réfrigérant (1) ou une remorque frigorifique (5) d'un véhicule.

12. Système frigorifique de transport (1) selon la revendication 10 ou 11, dans lequel le moteur à gaz configuré pour alimenter l'unité frigorifique de transport (15) est un premier moteur et le système frigorifique de transport (1) comprend un second moteur (9) qui est un moteur mobile principal destiné à propulser le déplacement du système frigorifique de transport (1).

13. Système de distribution de chaîne frigorifique comprenant un ou plusieurs systèmes frigorifiques de transport (1) selon la revendication 10, 11 ou 12.
